# EUROPEAN PATENT SPECIFICATION

(11) **EP 2 492 777 B1**
(45) Date of publication and mention of the grant of the patent: **11.12.2013**
(21) Application number: 11156033.0
(22) Date of filing: 25.02.2011
(51) Int. Cl.: G06F 1/32, H04B 1/16, H04W 52/02

(54) **A method and communication device for reducing power consumption in chip-to-chip signalling**
Verfahren und Kommunikationsvorrichtung zur Reduktion des Stromverbrauchs bei der Chip-Signalisierung
Procédé et dispositif de communication pour économies d'énergie et signalisation de puce à puce

(43) Date of publication of application: 29.08.2012
(73) Proprietor: Telefonaktiebolaget L M Ericsson AB (Publ), 164 83 Stockholm (SE)
(72) Inventor: Olsson, Thomas, 374 37, Karlshamn (SE); Carlsson, Anders, 222 40, Lund (SE); Lindoff, Bengt, 237 36, Bjärred (SE); Nilsson, Johan, 236 38, Höllviken (SE)
(74) Representative: Andersson, Karl Ola

(56) References cited:
- WO-A1-2008/083856
- WO-A2-2007/049203
- US-A1- 2008 186 146

## Description

### TECHNICAL FIELD

The present disclosure relates to a method in a communication device and a communication device for utilizing a first power mode and a second power mode of a digital interface between a first chip and a second chip.

### BACKGROUND

Power consumption is a critical issue for many modern radio receivers. As an example, it is of particular interest to keep the power consumption low, when a radio receiver is powered by a battery. By decreasing the power consumption, time between recharging or exchange of the battery may be extended.

A known radio receiver may be a user equipment (UE). It shall be noted that in other examples, the radio receiver may be a radio base station. The user equipment may be configured to be able to communicate with a cellular radio communication network, such as a Long Term Evolution (LTE) network, a Wideband Code Division Multiple Access (WCDMA)/ High-Speed Downlink Packet Access (HSPA) network or the like. The user equipment comprises a radio frequency chip (RF chip) for receiving a radio signal from the cellular radio communication network. Moreover, the user equipment comprises a base band chip for receiving a filtered and down converted RF signal from the RF chip. An interface between the RF chip and the base band chip is denoted a chip-to-chip interface or digital interface, which provides a wired communication link between the RF and base band chips. As an example, the interface may be implemented using a standard, such as DigRF. DigRF is a standard for specifying differential digital signaling for chip-to-chip communication. The chip-to-chip interface may be designed to be able to handle a worst case scenario. That is, chip-to-chip interface may be designed to transfer data from the RF chip to the base band chip at a highest possible data rate.

A problem associated with the transfer of data over the chip-to-chip interface may be that the power consumption is unnecessarily high. Therefore, the known radio receiver may be configured to operate in a hibernate mode, or sleep mode, which is used during sleep periods of a discontinuous reception (DRX) cycle. In this manner, a frequency synthesizer of the receiver may be powered down in order to reduce power consumption of the receiver. However, the need of reduced power consumption seems to be unappeasable. Therefore, there is a need of further reductions of the power consumption of receivers according to prior art.

WO2008083856 discloses a communication device that is capable of supporting communication compliant with a Dual- Mode 2.5G and 3G interface baseband (BB)-radio frequency (RF) interface standard and comprises a data interface operably coupled to a number sub-systems and a clock circuit generating a plurality of clock phases for supporting communication there between. At least one of the number of sub-systems comprises a line driver and a line receiver. The line receiver determines an end of a received data frame sent across the data interface and in response thereto switches itself off.

US2008186146 discloses a method and system for managing communications between sub-systems of a communication device. The sub-systems include a Radio Frequency Integrated Circuit (RFIC) and a Baseband Integrated Circuit (BBIC). The BBIC includes a processing engine, a state machine module and an interface module. The method includes initializing a Digital Radio Frequency Third Generation (DigRF3G) interface between the RFIC and the BBIC. The processing engine is kept functionally inactive during the initialization process of the DigRF3G interface. Further, the method includes exchanging one or more packets between the RFIC and the BBIC.

W02007049203 discloses a method for controlling a sleep mode of a device in a wireless communications network or in a mobile point-to-point connection in order to turn off system components of the device, especially to turn off a medium access control comprising the steps of: receiving a sleep mode information from an application module in a medium access control, coupled to an extended physical layer, especially to a base band, transferring the sleep mode information from the medium access control to the base band, setting a sleep signal of a power management mode to set one of the system components into sleep state, and, additionally, starting a predetermined first delay timer to delay the setting of the sleep state for one of the system components.

### SUMMARY

An object is to reduce power consumption of a radio receiver, such as a user equipment.

According to an aspect, the object is achieved by a method in a communication device for utilizing a first power mode and a second power mode of a digital interface. The digital interface is between a first chip and a second chip. The digital interface, the first and second chips are comprised in the communication device. When in the second power mode, the digital interface receives a data signal in a first time slot. The data signal comprises a control channel and a data channel. When the digital interface is in the first power mode, the communication device will determine a first point in time based on information that is comprised in the control channel. Furthermore, when the digital interface is in first power mode, the communication device determines a second point in time based on amount of data carried by the data channel, data rate of the digital Interface, and the first point in time. At the second point in time, the digital interface is brought into the second power mode and the data signal is transferred.

According to an aspect, the object is achieved by a communication device for utilizing a first power mode and a second power mode of a digital interface. The digital interface is between a first chip and a second chip. The digital interface, the first and second chips are comprised in the communication device. The communication device further comprises a processing circuit. The radio receiver of the first chip is configured to receive, when in the second power mode, a data signal in a first time slot. The data signal comprises a control channel and a data channel. The processing circuit is configured to bring the digital interface into the first power mode. The processing circuit is further configured to determine a first point in time based on information comprised in the control channel. The processing circuit is further configured to determine a second point in time based on amount of data carried by the data channel, data rate of the digital interface and the first point in time. The processing circuit is further configured to bring the digital interface into the second power mode at the second point in time. The processing circuit is further configured to transfer the data signal over the digital interface.

An advantage is that the digital interface may be brought into the first power mode, such as a hibernate mode or the like, more frequently and/or for extended time periods.

### BRIEF DESCRIPTION OF THE DRAWINGS

The various aspects of embodiments disclosed herein, including particular features and advantages thereof, will be readily understood from the following detailed description and the accompanying drawings, in which:
Figure 1 is a schematic block diagram illustrating embodiments of a communication device,
Figure 2 is a flowchart depicting embodiments of a method,
Figure 3 is a schematic block diagram illustrating an exemplifying communication device comprising a first and a second chip,
Figure 4 is a schematic block diagram illustrating the frame structure of LTE, and
Figure 5 is a schematic block diagram illustrating the frame structure of WCDMA/HSPA.
Figure 6 is a schematic block diagram illustrating the timing relation between PICH and S-CCPCH frames.

### DETAILED DESCRIPTION

With reference to the hibernate mode mentioned in the background section, the following may be noted.

In some case scenarios, there may be a possibility to use the hibernate mode also during other time periods than the sleep period of a DRX cycle. For example, this may be the case when the digital interface, being designed for worst case scenarios, has an over capacity in that an amount of data to be transferred over the digital interface is less than an amount of data that the digital interface is capable of transferring. Thus, in such scenario, it appears to be beneficial to bring the digital interface into the hibernate mode. When the digital interface is brought into the hibernate mode, also referred to as a sleep mode, a frequency synthesizer may be turned off. In this manner, a transmitter and/or a receiver, comprised in a user equipment or base station, may be powered down. However, when the digital interface is in the hibernate mode, a delay in the transmission over the digital interface is typically introduced. The delay may introduce problems in fulfilling timing constraints in the underlying cellular system. In the following, there is described two examples of timing constraints.

In a first example, relating to a WCDMA/HSPA network, the uplink (UL) and downlink (DL) power control has very tight time constraints. This means that a delay in the digital interface may degrade performance of the WCDMA/HSPA network.

In a second example, relating to a LTE network or an HSPA network, there are requirements on Hybrid automatic repeat request (HARQ) response. The timing of the HARQ response is determined by when the HARQ request is received. Typically, a fixed number of subframes determines the distance in time between the HARQ request and the HARQ response.

Hence, if the hibernate mode is used without taking such timing constraints into account, the system performance may degrade.

Briefly described, embodiments herein provide a concept for utilizing information about the timing constraints in a received signal or a signal to be transmitted for enabling and disabling a low power mode, such as a hibernate mode, of a digital interface, such as a chip-to-chip interface.

Furthermore, embodiments herein disclose how to utilize information about radio channel characteristics of the received signal. The received signal may be received over a radio channel. The timing constraints of the received signal may be used to determine a deadline, such as the initially mentioned first point in time, for when a transmission of a burst over the chip-to-chip interface needs to be finished. Furthermore, embodiments herein disclose how to utilize knowledge about whether a received signal is intended for a user equipment or not in order to decide whether a remaining part of a burst needs to be transferred over the chip-to-chip interface or not.

Embodiments disclosed herein are applicable for LTE as well as WCDMA/HSPA. Some background information regarding LTE and WCDMA/HSPA is provided in the following two paragraphs.

In LTE, information, such as scheduling, is signaled dedicated to each wireless communication device on a Physical Downlink Control Channel (PDCCH), which PDCCH share the same downlink time, frequency and transmission power resources as a shared channel carrying the user data, i.e. a Physical Downlink Shared Channel (PDSCH). The PDCCH share frequency resources with the PDSCH, but the PDCCH and the PDSCH are separated in time. The PDCCH may use 1 to 3 of the first Orthogonal Frequency-Division Multiplexing (OFDM) symbols of a sub frame. A sub frame may comprise 14 OFDM symbols. Thus, the PDSCH may use the 11 to 13 OFDM symbols following after the 1 to 3 OFDM symbols used by the PDCCH.

Wideband Code Division Multiple Access (WCDMA) is another multiple-access technology, where user equipments receive data on different downlink channelization codes. In High-Speed Downlink Packet Access (HSDPA), where all user equipments share the same High-Speed Downlink Shared Channel (HS-DSCH) for data, they also need to be informed about the scheduling information, i.e. the downlink channelization codes and the transport format of the transmission. So here, the scheduling information comprises HS-DSCH channelization code and transport format, which is signaled on the High Speed Shared Control Channel (HS-SCCH). The HS-SCCH and the HS-PDSCH may share same base station power resource and same scrambling code, but they may have different channelization codes.

Throughout the following description similar reference numerals have been used to denote similar elements, parts, items, network nodes or features, when applicable. In the Figures, features that appear in some embodiments are indicated by dashed lines.

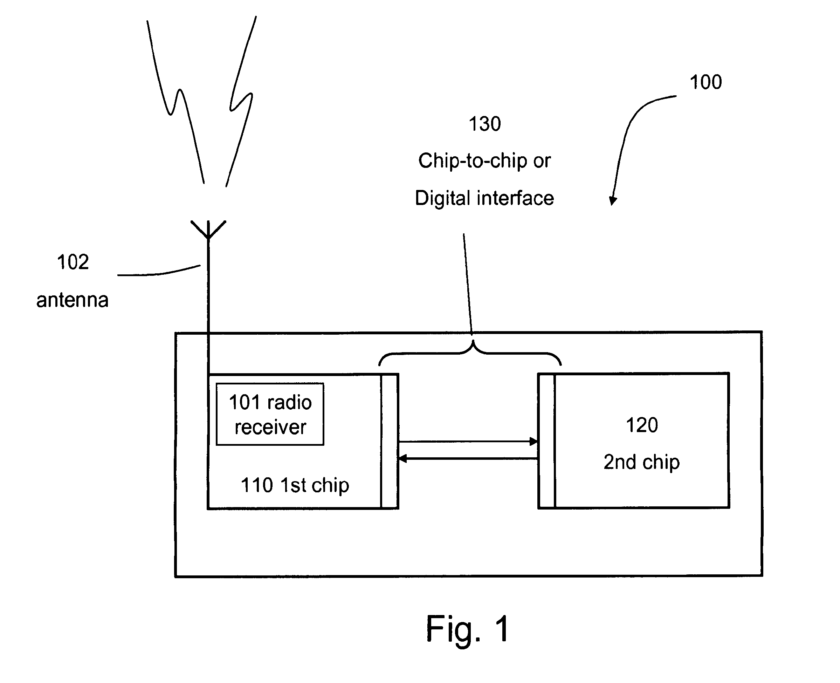

**Figure 1** depicts an exemplifying **communication device 100.** The communication device 100 may be a user equipment, a base station or the like. The communication device 100 may be comprised in a wireless communication system, such as an LTE communication system, a WCDMA communication system with or without HSPA capabilities or any other wireless communications system capable of using multiple-access technology.

The communication device 100 comprises **a chip-to-chip interface 130.** The chip-to-chip interface 130 may constitute a connection between **a first chip 110,** such as a RF chip, and **a second chip 120,** such as a base band chip. Moreover, the connection may be a wired connection.

The first chip 130 of the communication device 100 comprises **a radio receiver 101** for receiving, or transmitting, RF signals via **an antenna 102.** The radio receiver 101, or radio interface, may be said to constitute an interface between for instance a base station and the communication device 100, such as a user equipment.

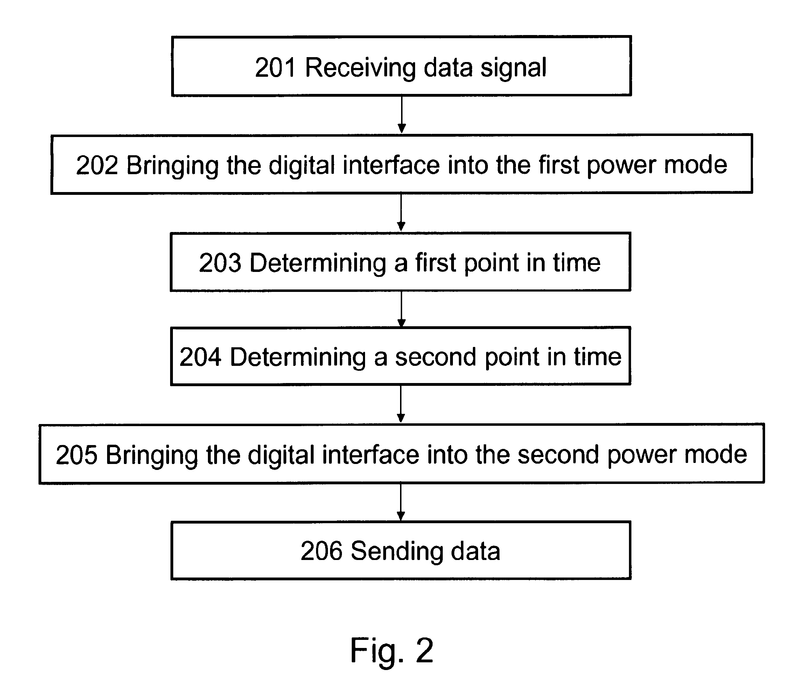

Turning to **Figure 2****,** there is shown a schematic flowchart of an exemplifying method in a communication device 100 for utilizing a first power mode and a second power mode of a digital interface 130 between a first chip 110, 310 and a second chip 120.The communication device 100 comprises the digital interface 130, the first chip 110 and the second chip 130. Furthermore, the first power mode may be referred to as a low power consumption mode and the second power mode may be referred to as a high power consumption mode.

The following actions may be performed. Notably, in some embodiments of the method the order of the actions may differ from what is indicated below and/or in the Figure.

**Action 201** When the digital interface 130 of the communication device 100 is in the second power mode, the communication device 100 receives a data signal in a first time slot, such as a subframe or slot. The received data signal comprises a control channel and a data channel. Furthermore, the control channel comprises information about radio channel characteristics and modulation.

**Action 202** The communication device 100 brings the digital interface 130 into the first power mode. Expressed differently, the digital interface 130 of the communication device 100 enters the first power mode.

**Action 203** The communication device 100 determines a first point in time based on information comprised in the control channel. This means that by taking information from the control channel about the timing constraints into account, it may be determined when a transmission of a burst of data over the digital interface is required to have been completely transferred. The burst of data may be transferred to the second chip from the first chip or vice versa.

The first point in time may be a point in time at which transfer of data must have finished in order to meet timing constraints as given by, for example, information comprised in the PDCCH.

**Action 204** The communication device 100 further determines a second point in time based on amount of data carried by the data channel and the first point in time. This means that when the amount of data to be sent is known, when the timing constraints for when the transmission of the burst it to be completely transferred is known, and the transmission throughput is known, it is possible to determine when the transmission is required to begin in order to be finished on or before the first point in time.

Expressed differently, the second point in time may be a point in time at which transfer of data according to action 206 below is required to begin in order to finish at or before first point in time. The second point in time may be determined based on amount of data to be transferred, data rate of the digital interface and the first point in time.

**Action 205** The communication device 100 brings the digital interface 130 into the second power mode. Expressed differently, the digital interface 130 enters the second power mode at the second point in time.

**Action 206** The communication device 100 transfers the data signal over the digital interface 130.

The received data signal in the first time slot may be received from a second communication device or the like.

Furthermore, the received data signal may comprise a parameter for which communication device to communicate with. Expressed somewhat differently, the parameter may identify an intended recipient of the data signal. As an example, the parameter may be a radio network temporary identifier (RNTI). If this parameter indicates that the received data signal is not intended for the communication device, the data signal will not be transferred over the digital interface. Instead, the digital interface may be brought into the first power mode, such as a hibernate mode.

The power saving potential of using hibernate mode instead of active mode may be related to 100-1000 times less power consumption than for active mode, such as the second power mode.

An alternative to hibernate mode may be to use a stall mode. This means that all digital interfaces are active, but no data is transferred over the digital interfaces. However, the stall mode may consume approximately 10-100 times more power than the hibernate mode.

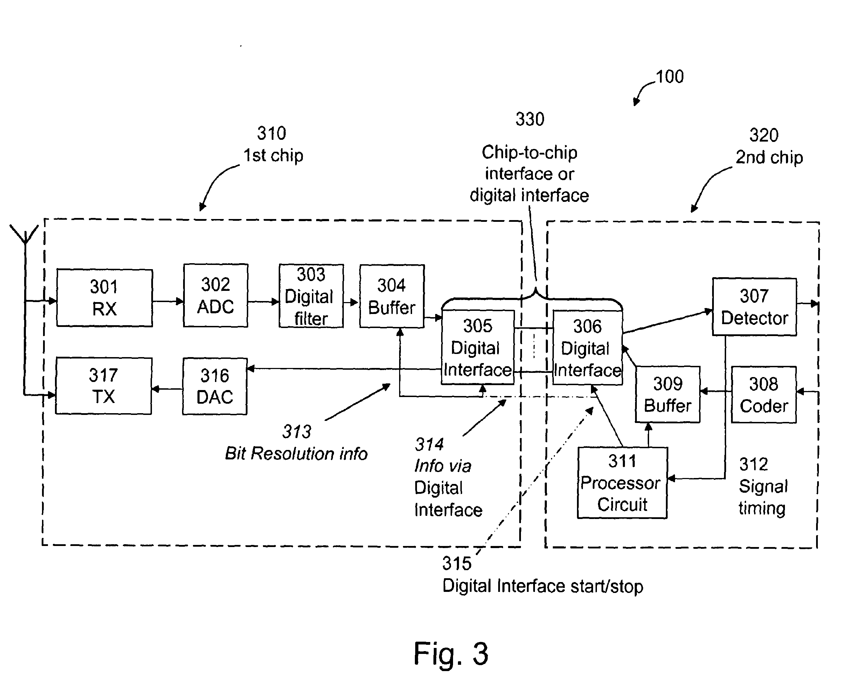

Turning now to **Figure 3****,** there is shown a schematic block diagram illustrating the exemplifying communication device 100 of Fig. 1 in more detail.

A radio signal may be received over the radio interface by the receiver 301 in the first chip 310, such as a radio frequency chip (RF). The first chip 310 is an example of the first chip 110 shown in Fig. 1. The radio signal may be transferred through a ADC 302, a digital filter 303 and a buffer 304 to a first digital interface 305 on the first chip 310. Further, the radio signal may be transferred to a second digital interface 306 on a second chip 320, such as a base band chip. The second chip is an example of the second chip 120 shown in Fig. 1. The first and second digital interfaces 305, 306 may be comprised in the chip-to-chip interface. In the second chip 320, the radio signal may be transferred to a detector 307 which comprises timing and frequency synchronization units.

An interaction in the second chip 320 between the second digital interface 306, the detector 307 and a processor circuit 311 with use of a coder 308 and a buffer 309 will determine when the hibernate mode may be active by transferred a start/stop signal 315. The processor circuit 311 may receive bit resolution info 313 regarding the radio signal by use of a communication 314.

In order to set the activity of the digital interfaces, timing instants, such as the first and second point in time, may be determined in the processor circuit 311.

The detector 307, which comprises timing and frequency synchronization units, may determine the frame timing. Based on the frame timing, the timing instants are determined. Then, radio channel characteristics and/or information of the received data packets is determined. For instance, the radio channel characteristics and/or information of the received data packets may be determined by reading a control channel.

Below the present solution is further described by examples related to LTE and WCDMA/HSPA for downlink transmission. In uplink transmission, the communication device has full control over the amount of data to be transferred.

### LTE:

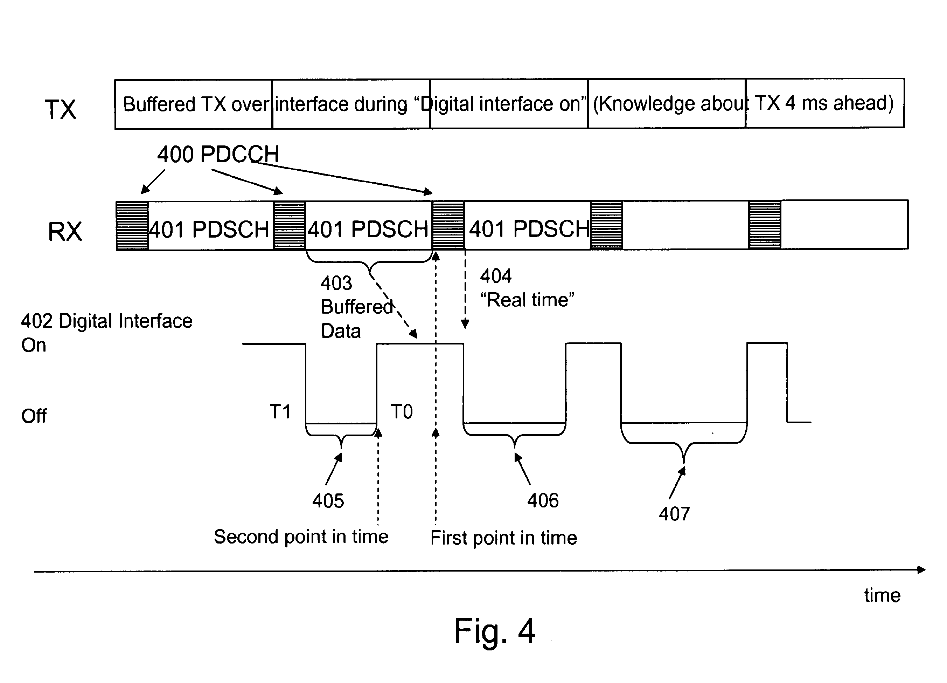

The sub-frame structure and a schematic picture according to the present solution for LTE are shown in **Figure 4****.** The control channel, PDCCH 400, is placed in the beginning of each sub frame which comprises information to which user equipment the data in the data channel PDSCH 401 is allocated. Furthermore, the control channel comprises modulation scheme, coding scheme and data scheduling. The data scheduling is resource blocks to be used for respective scheduled user equipment.

In LTE, there are timing constraints for making a Hybrid Automatic Repeat-reQuest (HARQ) Acknowledgement/Negative Acknowledgement (ACK/NAK) response 4 ms after a received packet. That will be the basis to set the requirements to decode the PDCCH 400 with a certain timing constraint. Therefore, there is a need to ensure that the end of the PDCCH 400 samples that are transferred over the digital interface 402 is reached at a certain time T1. The certain time T1 reduced with time for processing of a subsequent PDCCH may be the first point in time.

Since decoding of PDSCH 401 may not be started prior to decoding of PDCCH 400, parts of the PDSCH 401 may be buffered and the digital interface may be put into hibernate mode, denoted "off' in the Figure, until the PDCCH 400 is decoded. Hence, the PDCCH 400 as well as the PDSCH 401 samples are buffered 403 for some time and then transferred as late as possible without inferring additional delay. That is, the last samples of the PDCCH 400 should be transferred over the digital interface with minimum delay after the Digital Analog Converter (DAC). Furthermore, at least the PDCCH 400 samples do not need maximum performance of the digital interface, since the PDCCH 400 is transferred with QPSK, meaning a lower resolution. Therefore, a limited number of bits may be used, which may increase the duration of the time in hibernate mode, i.e. the first power mode.

The PDCCH 400 is then decoded. During decoding the PDSCH 401 samples out from the ADC 302, as depicted by Figure 3, is stored in a buffer 304. Once the PDCCH 400 is decoded and therefore the modulation and coding schemes are detected, a processing circuit 311 decides the buffer length, meaning which bits from the buffer, in the chip to chip interface 305, 306 to start transferring the remaining data as late as possible as depicted in Figure 4. Based on the detected information, the processing circuit 311 determines the start (T0) time, i.e. the second point in time, and stop (T1) time, i.e. the first point in time extended with time for processing of a subsequent PDCCH, of the digital interface 305, 306. At time T0 the digital interface goes from low power mode to high power mode, indicated by "on" in the Figure, and transfers data in both directions, i.e. from RF to base band (RX) as well as base band to RF (TX). Then at T1 the data transfer is stopped and the interface goes back to hibernate/low power mode. The arrival of the next PDCCH 400 then is the deadline, e.g. the first point in time, for the data of the preceding sub-frame.

If 64-QAM 405 is detected, the maximum amount of data, i.e. high resolution, will be used. That is that the data must be transferred before next PDCCH 400 arrives giving a shorter time for hibernate than if QPSK is detected.

If QPSK 406 is detected, a lower resolution will be used in the transmission, which therefore will need a short time of active mode of digital interface before next PDCCH 400. Therefore, the duration of the hibernate mode may be extended.

In another case 407, the PDCCH 400 shows that no data is scheduled. Then, the buffer will be discarded and the digital interface may be set to idle mode, i.e. the first power mode, until the next PDCCH 400.

In yet another case, the transmission TX of data may be performed when an amount of data exceeds a threshold value indicative of an amount of data required for transfer. This means that when it is detected that the amount of data is less than the threshold value, no transfer of data takes place. The digital interface may then instead be set to the first power mode until a subsequent frame is to be processed. The data that was not transferred will be transferred together with data of the subsequent frame.

As depicted in Figure 4 by 404 will the "real time" be the end of PDCCH 400 transfer. And as such should be aligned with PDCCH 400 timing. As an example, the first point in time may be a time instant at "real time" 404 reduced by the time required for processing of the PDCCH.

### WCDMA/HSPA:

Below are different embodiments described referring to WCDMA/HSPA, both active and idle mode.

### Active Mode

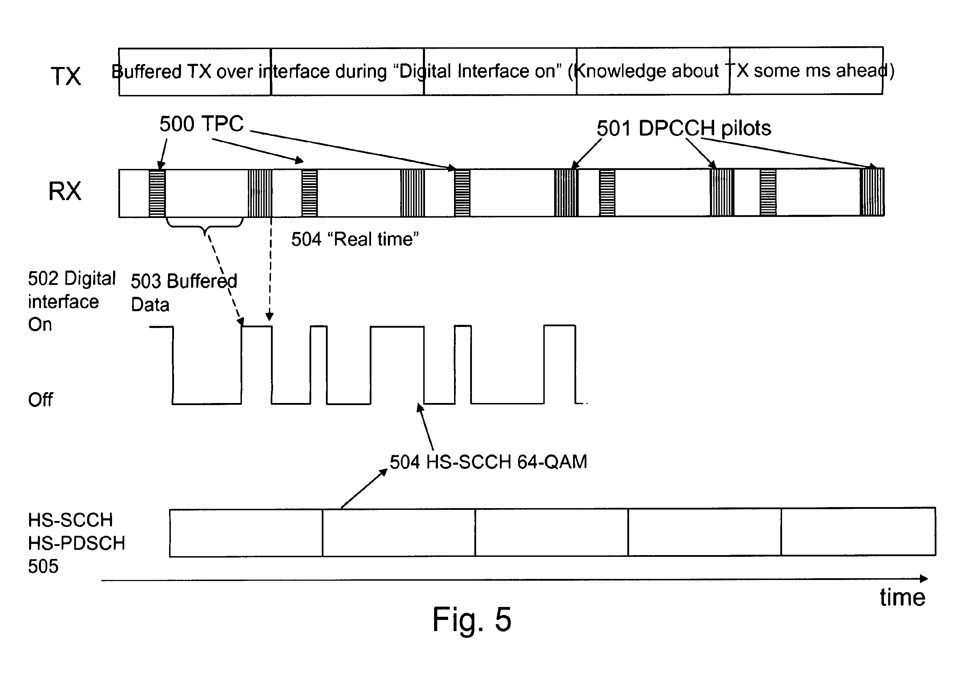

The frame structure for WCDMA is shown in **Figure 5****.** Unlike in LTE, which use only shared control and data channels, WCDMA/HSPA uses both shared and dedicated control and data channels. The shared control channel is HS-SCCH. Up to four channel codes can be allocated to HS-SCCH. In HS-PDSCH, a first timing is used to point out the channel codes, also referred to as channelization codes, which can be up to 15. Further, the first timing is used for pointing out modulation, coding and the user equipment data that is scheduled on a shared data channel (HS-PDSCH). The HS-PDSCH is delayed 2 slots relative the HS-SCCH and HS-PDSCH sets the quality requirement that may be needed for the digital interface transmission. Furthermore, in HSPA there is HARQ feedback and hence timing constraints on the HS-SCCH decoding.

As an example, if HS-SCCH indicates 64-QAM 504, that is high code rate, high resolution may be needed for the transmission.

However, it is the Dedicated Physical Control Channel (DPCCH) that sets the timing constraints in WCDMA/HSPA. Firstly, a Transmit Power Control (TPC) 500 command in the DL is used for setting the TX power in the UL in the next slot, and secondly the DPCCH pilots is used for estimating the DL dedicated channel quality. This will determine the UL TPC 500 command to be transferred in the forthcoming slot. The TPC 500 command is transferred roughly after 1/5 of each slot, and the DPCCH pilots 501 at the end of each slot, as shown in Figure 5.

In the same way as for LTE, data are buffered and transferred over the digital interface with a timing determined by received timing constraints as given by the DPCCH. The TPC 500 samples are buffered 503 for some time and then transferred as late as possible without inferring additional delay in the TPC decoding. That is, the last samples of the TPC 500 should be transferred over the digital interface with minimum delay after the DAC. Further, the DPCCH pilots 501 must also be sent with minimum delay and are thereby treated the same way as the TPC 500. Hence, in a WCDMA/HS scenario, the digital interface may in one embodiment enable/disable the low power mode twice per slot. However, due to implementation constraint in other embodiments, it may only be possible to use one low power mode per slot.

As depicted in Figure 5 by 504 will the "real time" be the end of TPC/DPCCH pilots transfer. And as such should be aligned with TPC/DPCCH timing.

### Idle Mode

In WCDMA, the user equipment may use Discontinuous Reception (DRX) in Idle Mode in order to reduce power consumption. When DRX is used the user equipment needs only to monitor one Page Indicator, (PI), in one paging Occasion per DRX cycle. The DRX cycle defines the periodicity of a DRX process where the longer the DRX cycle is, the longer the user equipment may be in hibernate mode.

The Paging Channel (PCH) is a downlink transport channel. The transmission of the PCH is associated with the transmission of physical-layer generated Paging Indicators, to support efficient sleep-mode procedures.

Each Secondary Common Control Physical Channel (S-CCPCH) indicated to the user equipment in system information may carry up to one PCH. Thus, for each defined PCH there is one uniquely associated Paging Indicator Channel (PICH) 602 also indicated.

The PICH 602 is a fixed rate physical channel enabled to carry the page indicators. The PICH 602 is always associated with an S-CCPCH 603 to which a PCH transport channel is mapped.

Thus, each DRX cycle reads a PICH 602.

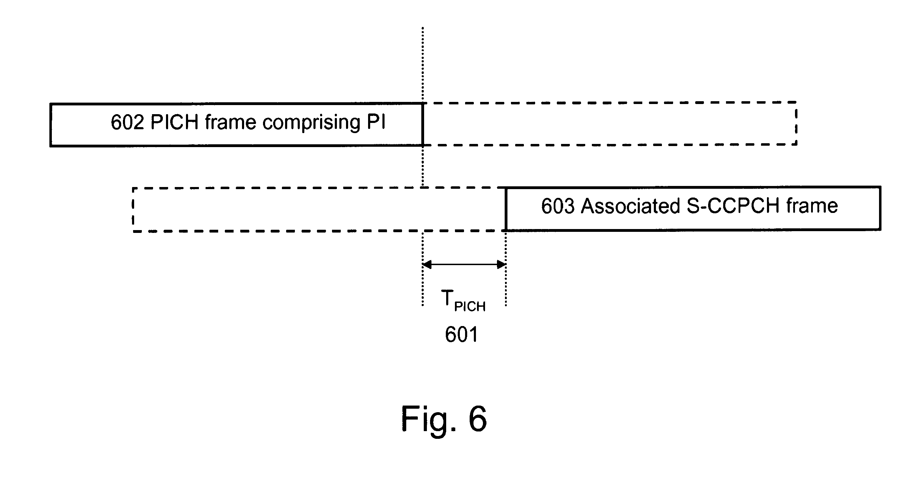

If the PICH 602 is set, the user equipment should read the information on a control channel, S-CCPCH 603, that is delayed some milliseconds in relation to the PICH 602. This is shown in **Figure 6** where the timing delay between the PICH frame 602 and its associated single S-CCPCH frame 603, being the S-CCPCH frame 603 that carries the paging information related to paging indicators (PI) in the PICH frame 602. The paging indicator set in a PICH frame 602 means that the paging message is transferred on the PCH in the S-CCPCH frame 603 starting a time T_{PICH} 601 after the transferred PICH frame 602. The same approach for controlling the digital interface may be applied to this case also. The timing is known prior to detecting the PICH 602, hence the digital interface is disabled, possibly combined with buffering the data, when the PICH 602 samples have been fed over the interface. When the digital interface is disabled, it is set to the second power mode. If PICH 602 is set, the digital interface is enabled, i.e. set to the first power mode, when the S-CCPCH 603 starts. In case the PICH 602 is not set, the samples are discarded and the radio receiver is turned off waiting for next PICH 602 in the next DRX cycle.

To perform the method actions, referred to in Figure 2 above, an exemplifying communication device 100 for utilizing a first power mode and a second power mode of a digital interface 130, 330 is provided as depicted in Figure 3. As mentioned above the digital interface 130, 330 is between the first chip 110, 310 and the second chip 120, 320 which are comprised in the communication device 100.

As mentioned above, the radio receiver 301 is configured to receive, in the second power mode, a data signal in a first time slot. The data signal comprises a control channel and a data channel.

As mentioned above, the processing circuit 311 is configured to bring the digital interface into the first power mode. As mentioned above, the processing circuit 311 is further configured to determine a first point in time based on information comprised in the control channel. As mentioned above, the processing circuit 311 is further configured to determine a second point in time based on amount of data carried by the data channel and the first point in time. As mentioned above, the processing circuit 311 is further configured to bring the digital interface 130, 330 into the second power mode at the second point in time. As mentioned above, the processing circuit 311 is further configured to transfer the data signal over the digital interface 130, 330.

The processing circuit 311 may be a processing unit, a processor, an application specific integrated circuit (ASIC), a field-programmable gate array (FPGA) or the like. As an example, a processor, an ASIC, an FPGA or the like may comprise one or more processor kernels.

According to some embodiments, the communication device 100 is configured to utilize the information in the control channel about radio channel characteristics and modulation.

According to some embodiments, the communication device is configured to utilize the received data signal which comprises a parameter for which communication device to communicate with.

According to some embodiments, the communication device is configured to transfer the data signal in the second power mode over the digital interface to a base band chip.

Throughout the present disclose, the expression "transfer" is intended to relate to transfer of data, such as control information or payload information, between the first and second chips.

Moreover, the expression "transmit" is intended to relate to transmission between two communication devices.

When using the word "comprise" or "comprising" it shall be interpreted as nonlimiting, i.e. meaning "consist at least of".

The present disclosure is not limited to the above described preferred embodiments. Various alternatives, modifications and equivalents may be used. Therefore, the above embodiments should not be taken as limiting the scope of the invention, which is defined by the appended claims.

## Claims

1. A method in a communication device (100) for utilizing a first power mode and a second power mode of a digital interface (130, 330) between a first chip (110, 310) and a second chip (120, 320), wherein the digital interface(130, 330), the first and second chips are comprised in the communication device (100), the method being **characterized by**:
- when the digital interface (130, 330) is in the second power mode, receiving (201) a data signal in a first time slot, wherein the data signal comprises a control channel and a data channel;
- bringing (202) the digital interface (130, 330) into the first power mode;
- determining (203) a first point in time based on information comprised in the control channel;
- determining (204) a second point in time based on amount of data carried by the data channel, data rate of the digital interface (130, 330) and the first point in time;
- at the second point in time, bringing (205) the digital interface (130, 330) into the second power mode; and
- transferring (206) the data signal.

2. The method according to claim 1, wherein the received data signal in the first time slot is received from a second communication device.

3. The method according to claim 1 or 2, wherein the control channel further comprises information about radio channel characteristics and modulation.

4. The method according to any one of the preceding claims, wherein the received data signal comprises a parameter for which communication device (100) to communicate with.

5. The method according to any one of the preceding claims, wherein power consumption of the digital interface (130, 330) in the first power mode is less than power consumption of the digital interface (130, 330) in the second power mode.

6. The method according to any one of the preceding claims, wherein the first chip (110,310) comprises a RF chip.

7. The method according to any one of the preceding claims, wherein the second (120,320) chip comprises a base band chip.

8. A communication device (100) for utilizing a first power mode and a second power mode of a digital interface (130, 330) between a first chip (110,310) and a second chip (120, 320), wherein the digital interface (130, 330), the first and second chips are comprised in the communication device (100), wherein the communication device (100) further comprises:
- a radio receiver (301) configured to receive, in the second power mode, a data signal in a first time slot, wherein the data signal comprises a control channel and a data channel;
- a processing circuit (311) **characterized in that** the processing circuit (311) is configured to bring the digital interface into the first power mode,
the processing circuit (311) further being configured to determine a first point in time based on information comprised in the control channel,
the processing circuit (311) further being configured to determine a second point in time based on amount of data carried by the data channel, data rate of the digital interface (130, 330) and the first point in time;
the processing circuit (311) further being configured to bring the digital interface (130, 330) into the second power mode at the second point in time; the processing circuit (311) further being configured to transfer the data signal over the digital interface (130, 330).

9. The communication device (100) according to claim 8, wherein the control channel further comprises information about radio channel characteristics and modulation.

10. The communication device (100) according to claim 9, wherein the received data signal comprises a parameter for which communication device (100) to communicate with.

## Patentansprüche

1. Verfahren in einer Kommunikationsvorrichtung (100) zur Verwendung eines ersten Leistungsmodus und eines zweiten Leistungsmodus einer digitalen Schnittstelle (130, 330) zwischen einem ersten Chip (110, 310) und einem zweiten Chip (120, 320), wobei die digitale Schnittstelle (130, 330) und die ersten und zweiten Chips in der Kommunikationsvorrichtung (100) enthalten sind, wobei das Verfahren **gekennzeichnet ist durch**:
- Empfangen (201), wenn die digitale Schnittstelle (130, 330) im zweiten Leistungsmodus ist, eines Datensignals in einem ersten Zeitschlitz, wobei das Datensignal einen Steuerkanal und einen Datenkanal umfasst;
- Versetzen (202) der digitalen Schnittstelle (130, 330) in den ersten Leistungsmodus;
- Bestimmen (203) eines ersten Zeitpunkts basierend auf Informationen, die im Steuerkanal enthalten sind;
- Bestimmen (204) eines zweiten Zeitpunkts basierend auf einer Menge von Daten, die **durch** den Datenkanal übertragen werden, einer Datenrate der digitalen Schnittstelle (130, 330) und dem ersten Zeitpunkt;
- Versetzen (205) der digitalen Schnittstelle (130, 330) zum zweiten Zeitpunkt in den zweiten Leistungsmodus; und
- Übertragen (206) des Datensignals.

2. Verfahren nach Anspruch 1, wobei das empfangene Datensignal im ersten Zeitschlitz von einer zweiten Kommunikationsvorrichtung empfangen wird.

3. Verfahren nach Anspruch 1 oder 2, wobei der Steuerkanal ferner Informationen über Funkkanaleigenschaften und -modulation umfasst.

4. Verfahren nach einem der vorhergehenden Ansprüche, wobei das empfangene Datensignal einen Parameter dafür umfasst, mit welcher Kommunikationsvorrichtung (100) kommuniziert werden soll.

5. Verfahren nach einem der vorhergehenden Ansprüche, wobei der Leistungsverbrauch der digitalen Schnittstelle (130, 330) im ersten Leistungsmodus geringer als der Leistungsverbrauch der digitalen Schnittstelle (130, 330) im zweiten Leistungsmodus ist.

6. Verfahren nach einem der vorhergehenden Ansprüche, wobei der erste Chip (110, 310) einen RF-Chip umfasst.

7. Verfahren nach einem der vorhergehenden Ansprüche, wobei der zweite Chip (120, 320) einen Basisband-Chip umfasst.

8. Kommunikationsvorrichtung (100) zum Verwenden eines ersten Leistungsmodus und eines zweiten Leistungsmodus einer digitalen Schnittstelle (130, 330) zwischen einem ersten Chip (110, 310) und einem zweiten Chip (120, 320), wobei die digitale Schnittstelle (130, 330) und die ersten und zweiten Chips in der Kommunikationsvorrichtung (100) enthalten sind, wobei die Kommunikationsvorrichtung (100) ferner umfasst:
- einen Funkempfänger (301), der so konfiguriert ist, dass er im zweiten Leistungsmodus ein Datensignal in einem ersten Zeitschlitz empfängt, wobei das Datensignal einen Steuerkanal und einen Datenkanal umfasst;
- eine Verarbeitungsschaltung (311), **dadurch gekennzeichnet, dass** die Verarbeitungsschaltung (311) so konfiguriert ist, dass sie die digitale Schnittstelle in den ersten Leistungsmodus versetzt,
wobei die Verarbeitungsschaltung (311) ferner so konfiguriert ist, dass sie einen ersten Zeitpunkt basierend auf Informationen bestimmt, die im Steuerkanal enthalten sind,
die Verarbeitungsschaltung (311) ferner so konfiguriert ist, dass sie einen zweiten Zeitpunkt basierend auf einer Menge von Daten, die durch den Datenkanal übertragen werden, einer Datenrate der digitalen Schnittstelle (130, 330) und dem ersten Zeitpunkt bestimmt;
die Verarbeitungsschaltung (311) ferner so konfiguriert ist, dass sie die digitale Schnittstelle (130, 330) zum zweiten Zeitpunkt in den zweiten Leistungsmodus versetzt;
die Verarbeitungsschaltung (311) so konfiguriert ist, dass sie das Datensignal über die digitale Schnittstelle (130, 330) überträgt.

9. Kommunikationsvorrichtung (100) nach Anspruch 8, wobei der Steuerkanal ferner Informationen über Funkkanaleigenschaften und -modulation umfasst.

10. Kommunikationsvorrichtung (100) nach Anspruch 9, wobei das empfangene Datensignal einen Parameter dafür umfasst, mit welcher Kommunikationsvorrichtung (100) kommuniziert werden soll.

## Revendications

1. Procédé dans un dispositif de communication (100) pour utiliser un premier mode de consommation électrique et un second mode de consommation électrique d'une interface numérique (130,330), entre une première puce (110,310) et une seconde puce (120,320), dans lequel l'interface numérique (130,330), la première et la seconde puces sont comprises dans le dispositif de communication (10), le procédé étant **caractérisé par** :
- quand l'interface numérique (130,330) se trouve dans le second mode de consommation électrique, recevoir (201) un signal de données dans un premier intervalle de temps, dans lequel le signal de données comprend un canal de commande et un canal de données ;
- amener (202) l'interface numérique (130,330) au premier mode de consommation électrique ;
- déterminer (203) un premier moment dans le temps sur la base d'une information comprise dans le canal de commande ;
- déterminer (204) un second moment dans le temps sur la base d'une quantité de données transportées par le canal de données, le débit de données de l'interface numérique (130,330) et le premier moment dans le temps ;
- au second moment dans le temps, amener (205) l'interface numérique (130,330) au second mode de consommation électrique ; et
- transférer (206) le signal de données.

2. Procédé selon la revendication 1, dans lequel le signal de données reçu dans le premier intervalle de temps est reçu depuis un second dispositif de communication.

3. Procédé selon les revendications 1 ou 2, dans lequel le canal de commande comprend en outre une information relative aux caractéristiques et à la modulation du canal radio.

4. Procédé selon une quelconque des revendications précédentes, dans lequel le signal de données reçu comprend un paramètre pour le dispositif de communication (100) avec lequel communiquer.

5. Procédé selon une quelconque des revendications précédentes, dans lequel la consommation électrique de l'interface numérique (130,330) dans le premier mode de consommation électrique est inférieure à la consommation électrique de l'interface numérique (130,330) dans le second mode de consommation électrique.

6. Procédé selon une quelconque des revendications précédentes, dans lequel la première puce (110,310) comprend une puce RF.

7. Procédé selon une quelconque des revendications précédentes, dans lequel la seconde puce (120,320) comprend une puce de bande de base.

8. Dispositif de communication (100) pour utiliser un premier mode de consommation électrique et un second mode de consommation électrique d'une interface numérique (130,330) entre une première puce (110,310) et une seconde puce (120,320), dans lequel l'interface numérique (130,330), la première et la seconde puces sont comprises dans le dispositif de communication (100), dans lequel le dispositif de communication (100) comprend en outre :
- un récepteur radio (301) configuré pour recevoir, dans le second mode de consommation électrique, un signal de données dans un premier intervalle de temps, dans lequel le signal de données comprend un canal de commande et un canal de données ;
- un circuit de traitement (311), **caractérisé en ce que** le circuit de traitement (311) est configuré pour amener l'interface numérique dans le premier mode d'alimentation électrique,
le circuit de traitement (311) étant en outre configuré pour déterminer un premier moment dans le temps sur la base de l'information comprise dans le canal de commande,
le circuit de traitement (311) étant en outre configuré pour déterminer un second moment dans le temps sur la base d'une quantité de données transportées par le canal de données, le débit de données de l'interface numérique (130,330) et le premier moment dans le temps ;
le circuit de traitement (311) étant en outre configuré pour amener l'interface numérique (130,330) au seconde mode de consommation électrique au second moment dans le temps ; le circuit de traitement (311) étant en outre configuré pour transférer le signal de données via l'interface numérique (130,330).

9. Dispositif de communication (100) selon la revendication 8, dans lequel le canal de commande comprend en outre une information relative aux caractéristiques et à la modulation du canal radio.

10. Dispositif de communication (100) selon la revendication 9, dans lequel le signal de données reçu comprend un paramètre pour le dispositif de communication (100) avec lequel communiquer.
